# EUROPÄISCHE PATENTSCHRIFT

(11) **EP 1 037 734 B1**
(45) Veröffentlichungstag und Bekanntmachung des Hinweises auf die Patenterteilung: **08.05.2002**
(21) Anmeldenummer: 98963561.0
(22) Anmeldetag: 11.12.1998
(51) Int. Cl.: B29C 44/00

(54) **FARBROLLERWALZE UND VERFAHREN ZU IHRER HERSTELLUNG**
PAINT ROLLER AND ITS PRODUCTION PROCESS
ROULEAU DE MISE EN PEINTURE ET PROCEDE PERMETTANT DE LE PRODUIRE

(30) Priorität: 13.12.1997 DE 19755533
(43) Veröffentlichungstag der Anmeldung: 27.09.2000
(73) Patentinhaber: Sterkel GmbH Pinsel- und Farbrollerwerk, D-88284 Wolpertswende (DE)
(72) Erfinder: WEIHRAUCH, Georg, D-69749 Wald-Michelbach (DE)
(74) Vertreter: Lasch, Hartmut Dipl.-Ing.
(86) Internationale Anmeldenummer: EP9808078
(87) Internationale Veröffentlichungsnummer: WO9930889

(56) Entgegenhaltungen:
- EP-A- 0 765 722
- DE-A- 2 538 588
- US-A- 5 025 039
- DATABASE WPI Section Ch, Week 8840 Derwent Publications Ltd., London, GB; Class A32, AN 88-278396 XP002900426 & BR 8 700 925 A (PINCEIS TIGRE SA) , 6. September 1988
- DATABASE WPI Section Ch, Week 9315 Derwent Publications Ltd., London, GB; Class A32, AN 93-124579 XP002900427 & SU 1 729 783 A (MURMANSK SHIP BUILDING INST), 30. April 1992

## Beschreibung

Die Erfindung betrifft ein Verfahren zur Herstellung einer Farbrollerwalze, die einen Walzenkörper aus einem Kunststoff-Schaum mit einer Innenausnehmung zur Aufbringung auf einen Tragbügel aufweist. Darüber hinaus betrifft die Erfindung eine entsprechende Farbrollerwalze.

Ein Farbroller umfaßt üblicherweise einen aus Stahldraht gebogenen oder aus Kunststoff bestehenden Tragbügel, an dessen unterem Ende ein Handgriff ausgebildet ist. Auf das obere, freie Ende des Tragbügels ist eine Farbrollerwalze derart aufschiebbar, daß sie drehbar auf dem Tragbügel gehalten ist.

Eine herkömmliche Farbrollerwalze besitzt einen Walzenkörper, in dem eine ein- oder mehrteilige Befestigungshülse angeordnet ist, die mit dem Tragbügel in Eingriff tritt. Zur Herstellung einer bekannten Farbrollerwalze wird im sogenannten Blockschäumverfahren ein relativ großer Block aus Polyester-Polyurethan-Weichschaum hergestellt. Derartige Polyester-PUR-Schäume sind aufgrund ihrer ausreichend hohen chemischen Beständigkeit auch für Farbrollerwalzen geeignet, die bekanntlich auch zur Verarbeitung lösungsmittelhaltiger Substanzen und insbesondere Farben verwendet werden. Darüber hinaus sind Polyester-PUR- Schäume sehr formstabil und quellen nicht.

Aus dem aus Polyester-PUR-Schaum bestehenden Block wird die Form der Farbrollerwalze mechanisch durch Ausstanzen. oder Ausschneiden herausgearbeitet. Anschließend wird die Innenausnehmung gebohrt und das dem Einführende für den Tragbügel entgegengesetzte Ende der Farbrollerwalze wird rundgefräst. Abschließend wird die Befestigungshülse in die Innenausnehmung eingeführt und dort verklebt. Dieses Herstellungsverfahren ist aufgrund seiner Vielzahl von Arbeitsschritten sehr aufwendig und somit teuer. Darüber hinaus ergibt sich bei dem Herausarbeiten der Farbrollerwalze aus dem Block sowie dem Rundfräsen des Endes ein Materialverlust von bis zu 30%, was nicht nur unwirtschaftlich, sondern auch wenig umweltverträglich ist.

Aus der DE-AS 1 960 394 ist es bekannt, eine Farbauftragwalze eines Farbrollers aus Schaumstoff, beispielsweise Polyurethan, herzustellen, indem in einen als Form dienenden, zylindrischen Plüsch- oder Fellbezug zwei Kunststoffkomponenten eingebracht werden, die dort miteinander reagieren, sich ausdehnen und den Bezug vollständig ausfüllen. Dabei ergibt sich jedoch aufgrund der bereichsweise unterschiedlichen Nachgiebigkeit des Plüsch- oder Fellbezuges keine definierte kreiszylindrische Form der Farbauftragswalze, wodurch diese bei der Benutzung unrund läuft und der Farbauftrag nachteilig beeinflußt ist.

Darüber hinaus sind sogenannte Integralschäume bekannt, die beim Aufschäumen auf der Außenseite eine stabile, geschlossene Deckschicht bilden. Diese Deckschicht stabilisiert zwar den aufgeschäumten Körper, ist jedoch aufgrund ihrer glatten Oberflächenstruktur für den Farbauftrag ungeeignet.

Ein weiteres Verfahren zur Herstellung einer Farbrollerwalze und die entsprechende Walze sind aus dem Dokument DE-A1-25 38 588 bekannt.

Der Erfindung liegt die Aufgabe zugrunde, ein Verfahren zur Herstellung einer Farbrollerwalze zu schaffen, mit dem diese in kostengünstiger und umweltverträglicher Weise herstellbar ist und die einen guten Farbauftrag gewährleisten. Darüber hinaus soll eine entsprechende Farbrollerwalze geschaffen werden.

Diese Aufgabe wird hinsichtlich des Verfahrens durch die Merkmale des Anspruchs 1 gelöst. Dabei wird der Walzenkörper in einem Formwerkzeug aufgeschäumt. Auf diese Weise erhält die Farbrollerwalze bereits beim Aufschäumvorgang die gewünschte Form, so daß keine oder nur wesentlich geringere Nacharbeiten erforderlich sind und ein Materialverlust vermieden ist.

Zusätzlich werden die Verfahrensparameter, beispielsweise die Werkzeug-Temperatur, die Kühlung, die Schaumdichte, der Aufschäumdruck etc, die sich durch die Zusammensetzung des Kunststoffmaterials steuern lassen, so eingestellt, daß auf der Außenoberfläche des Walzenkörpers und/oder der Wandung der Innenausnehmung eine geschlossene, verfestigte Haut des Kunststoffmaterials gebildet wird. Auf diese Weise erhält die Farbrollerwalze ohne spezielle weitere Bauteile eine hohe räumliche Stabilität. Darüber hinaus ist dabei auf der Außenoberfläche des Walzenkörpers eine kontinuierliche, glatte Oberflächenstruktur gegeben, wie es insbesondere bei Andruckwalzen oder auch bei Walzen sinnvoll ist, die nachträglich mit einem Überzug oder hülsenartigen Dekorelementen oder mit plüsch- oder fellbelegten zylindrischen Walzen oder Ringen versehen werden. Die Haut vermindert darüber hinaus die Einwirkung von Feuchtigkeit und Lösungsmitteln auf den Kunststoff-Schaum und stabilisiert den Walzenkörper bei Gebrauch während einer Abrollbewegung, bei der er einseitig belastet wird. Um die Farbrollerwalze jedoch auch zum direkten Farbauftrag verwenden zu können, ist es vorgesehen, zumindest die auf der Außenoberfläche des Walzenkörpers gebildete Haut ganz oder teilweise in einem nachfolgenden Verfahrensschrift zu öffnen oder abzutragen. Dies kann beispielsweise durch Schneiden, Schleifen, Schälen, Sandstrahlen oder Anlösen erfolgen.

Als Material für den Walzenkörper wird vorzugsweise ein Polyester-PUR-Schaum verwendet, der bisher noch nicht formgeschäumt wurde. Es sind jedoch auch andere Materialien denkbar, soweit diese eine hohe Chemikalienbeständigkeit und insbesondere Lösungsmittelbeständigkeit besitzen. Bei den alternativen Materialien kann es sich z. B. um weitere PUR-Schäume, einen reinen Polyolefin-, Polyimid- oder Polyester-Schaum handeln.

Auch bei der erfindungsgemäßen Farbrollerwalze kann in der Innenausnehmung des Walzenkörpers eine Befestigungshülse angeordnet werden, die mit dem Tragbügel in Eingriff tritt. Die Befestigungshülse, die vorzugsweise aus Kunststoff besteht, kann separat von dem Walzenkörper gefertigt und nachträglich in dessen Innenausnehmung eingebracht und dort festgelegt werden, wobei zur Vermeidung einer Klebeverbindung an der Befestigungshülse vorstehende Eingriffselemente ausgebildet sein können, die in die Wandung der Innenausnehmung des Walzenkörpers eingreifen und somit die Hülse in formschlüssiger Weise halten. Als Eingriffselemente haben sich insbesondere außenseitig vorstehende Zähne oder Widerhaken bewährt.

Alternativ kann die Farbrollerwalze auch so hergestellt werden, daß die zunächst die Befestigungshülse in das Formwerkzeug eingebracht und in einem darauffolgenden Verfahrensschritt mit dem Walzenkörper umgeben oder umschäumt wird. Auch hierbei kann die Befestigungshülse separat vorgefertigt sein, vorzugsweise wird sie jedoch zur Durchführung eines Mehrkomponentenverfahrens zunächst in dem Formwerkzeug gespritzt. Durch diese Inline-Fertigung können die Herstellkosten einer Farbrollerwalze wesentlich reduziert werden.

Die nach dem erfindungsgemäßen Verfahren hergestellte Farbrollerwalze läßt sich mit einem relativ geringen Gewicht ausbilden, so daß die Arbeit mit einem entsprechenden Farbroller erleichtert ist.

In bevorzugter Ausgestaltung der Erfindung wird in der Innenausnehmung des Walzenkörpers zumindest eine Hinterschneidung ausgebildet. Dies ermöglicht es, am Tragbügel ausgebildete Rast- oder Federlaschen in der Innenausnehmung zu spreizen, die dann in die Hinterschneidung eingreifen und somit die Farbrollerwalze auf dem Tragbügel halten. Wenn die auf der Wandung der Innenausnehmung gebildete verfestigte Haut des Kunststoffmaterials eine ausreichende Festigkeit besitzt, kann gegebenenfalls auf eine Befestigungshülse verzichtet werden. Alternativ kann eine Befestigungshülse zu Stabilisierungszwecken vorgesehen sein, die von den Federlaschen des Tragbügels hintergriffen wird.

Eine Hinterschneidung in der Innenausnehmung läßt sich in einfacher Weise mit dem erfindungsgemäßen Verfahren herstellen, da der die Hinterschneidung ausformende Kern des Formwerkzeuges unter elastischer Verformung des Schaummaterials des Walzenkörpers herausgezogen werden kann.

Der Walzenkörper kann auf seiner Außenoberfläche mit einer Strukturierung versehen werden. Dies läßt sich erfindungsgemäß in einfacher Weise erreichen, wenn die Innenwandung des Formwerkzeuges entsprechend strukturiert ist. Alternativ oder zusätzlich dazu kann auch eine nachträgliche Oberflächenbearbeitung erfolgen.

Es ist bekannt, eine Farbrollerwalze als Träger für einen außenseitig anzubringenden Belag zu verwenden, der beispielsweise mit Lammfell, Plüsch oder anderen Materialien versehen sein kann. Es sind jedoch auch andere Belege denkbar. Die Anbringung eines Belages auf der Außenoberfläche des Walzenkörpers läßt sich erfindungsgemäß erreichen, wenn der Belag vor dem Aufschäumen des Walzenkörpers in das Formwerkzeug eingelegt wird. Dabei kann auch zwischen dem Belag und dem Walzenkörper ein Trennmittel vorgesehen sein, daß das nachträgliche Entfernen des Belages ermöglicht.

Da sich mit dem erfindungsgemäßen Verfahren auf der Außenoberfläche des Walzenkörpers in einfacher Weise Ausnehmungen oder Hinterschneidungen ausbilden lassen, können diese auch zur formschlüssigen und/oder kraftschlüssigen Festlegung eines nachträglich angebrachten Überzuges oder Belages verwendet werden. In vorzugsweiser Ausgestaltung ist vorgesehen, daß die Farbrollerwalze auf der die Einführöffnung für die Innenausnehmung aufweisenden Stirnseite des Walzenkörpers eine Nut aufweist, in die Enden eines Überzuges zur form- und/oder kraftschlüssigen Halterung eingestülpt werden können. Vorzugsweise ist die Nut ringförmig ausgebildet und umgibt die Einführöffnung.

Gegebenenfalls kann der Überzug auch an der entgegengesetzten, der Einführöffnung abgewandten Stirnseite in einer dort ausgebildeten Vertiefung in form- und/oder kraftschlüssiger Weise festgelegt werden.

Hinsichtlich der Farbrollerwalze ist erfindungsgemäß vorgesehen, daß auf der Außenoberfläche des Walzenkörpers und/oder der Wandung der Innenausnehmung abschnittsweise eine geschlossene, verfestigte Haut des Kunststoff-Materials ausgebildet ist, die der Farbrollerwalze die notwendige Stabilität verleiht. Weitere Merkmale der Farbrollerwalze ergeben sich aus der vorhergehenden Beschreibung des Verfahrens.

Weitere Einzelheiten der Erfindung sind aus der folgenden Beschreibung von Ausführungsbeispielen unter Bezugnahme auf die Zeichnung ersichtlich. Es zeigen:
- Figur 1: eine schematische Darstellung einer Anlage zur Durchführung des erfindungsgemäßen Verfahrens,
- Figur 2: einen Längsschnitt einer Farbrollerwalze,
- Figur 3: die Farbrollerwalze gemäß Figur 2 nach einer Nachbearbeitung,
- Figur 4: die Farbrollerwalze gemäß Figur 2 nach einer anderen Nachbearbeitung,
- Figur 5: eine Seitenansicht einer Befestigungshülse,
- Figur 6: einen Längsschnitt durch die Befestigungshülse gemäß Figur 5,
- Figur 7: eine auf einem Tragbügel montierte Farbrollerwalze,
- Figur 8: eine Farbrollerwalze in abgewandelter Ausgestaltung,
- Figur 9: eine Farbrollerwalze mit außenseitigem Belag und
- Figur 10: eine Farbrollerwalze mit äußerer Strukturierung,
- Figur 11: eine Farbrollerwalze zur Aufnahme eines Überzuges,
- Figur 12: die Farbrollerwalze gemäß Figur 12 mit aufgezogenem Überzug,
- Figur 13: eine Farbrollerwalze mit aufgesetzter Überzughülse und
- Figur 14: eine Farbrollerwalze mit aufgesetzten Überzugringen.

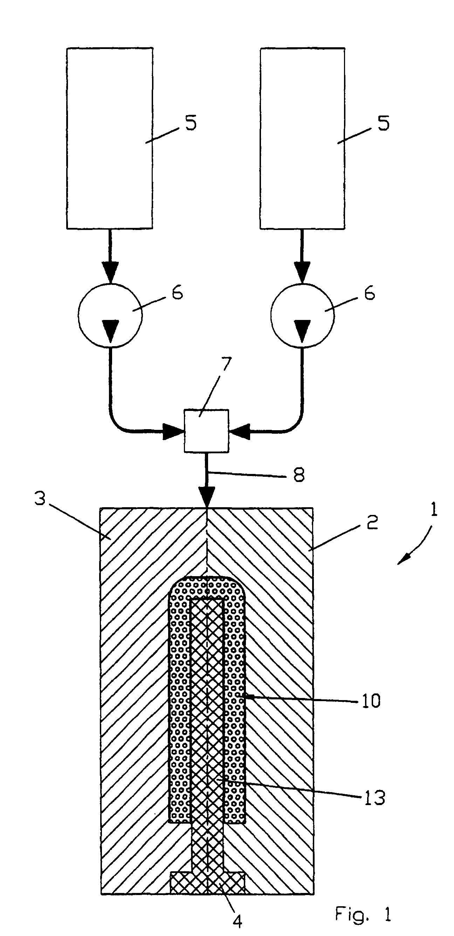

Figur 1 zeigt eine Anlage zur Herstellung einer Farbrollerwalze 10 nach dem erfindungsgemäßen Verfahren. Die Anlage umfaßt ein Formwerkzeug 1 mit zwei die Farbrollerwalze 10 außenseitig abformenden Formhälften 2 und 3 sowie einem Formkern 4, der eine Innenausnehmung 13 der Formrollerwalze 10 definiert. Schematisch sind zwei Vorratsbehälter 5 für unterschiedliche Materialkomponente vorgesehen, die jeweils über ein Förder- und Dosieraggregat 6 einer Mischvorrichtung 7 zugeführt werden können, aus der das Material über eine nur schematisch angedeutete Zuführleitung 8 in den Formhohlraum des Formwerkzeuges 1 eingebracht wird. Dort wird das Material, bei dem es sich insbesondere um ein Polyester-PUR-Material handelt, zur Bildung der Formrollerwalze 10 aufgeschäumt.

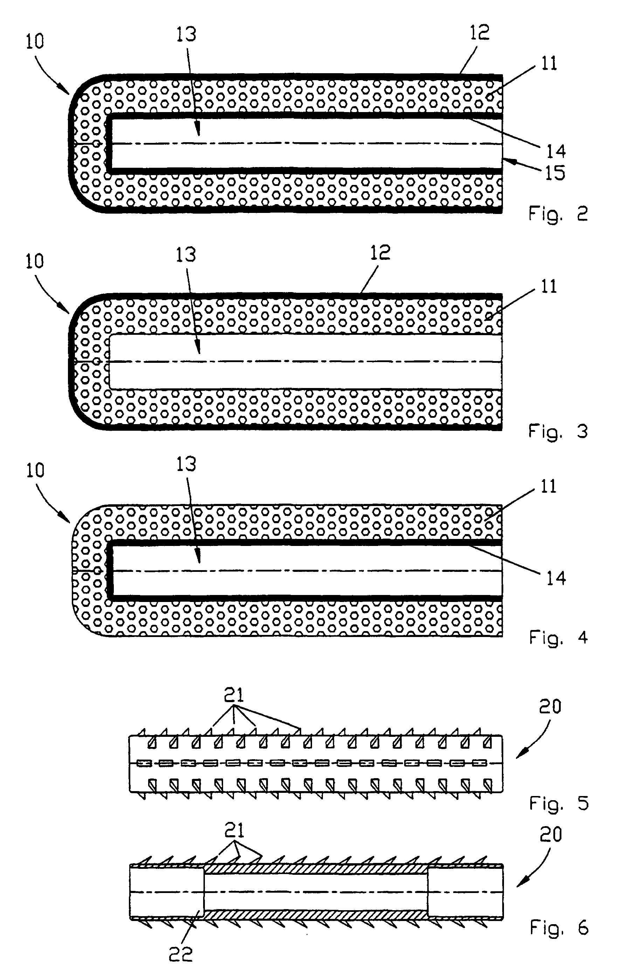

Nach Öffnen der Formhälfte 2 und 3 und Ziehen des Formkerns 4 ergibt sich die Formrollerwalze 10, wie sie in Figur 2 dargestellt ist. Diese weist einen im wesentlichen zylindrischen Walzenkörper 11 auf, der an seinem vorderen Ende geschlossen und außenseitig abgerundet ist. Die durch den Formkern 4 gebildete Innenausnehmung 13 ist in bekannter Weise über eine dem abgerundeten Ende entgegengesetzte Einführöffnung 15 zugänglich, durch die die Farbrollerwalze auf einen Tragbügel aufgeschoben werden kann.

Durch den Aufschäumdruck des Kunststoff-Materials ist sowohl auf der Außenoberfläche des Walzenkörpers 11 als auch auf der Wandung der Innenausnehmung 13 eine geschlossene, verfestigte Haut 12 bzw. 14 des Kunststoff-Materials gebildet. Diese Häute 12 und 14 können in einem nachfolgenden Arbeitsschritt zumindest abschnittsweise mechanisch geöffnet oder abgetragen werden. Figur 3 zeigt eine Farbrollerwalze 10, bei der die Haut 14 auf der Wandung der Innenausnehmung 13 abgearbeitet wurde, während bei der Farbrollerwalze gemäß Figur 4 lediglich die Haut 12 auf der Außenoberfläche des Walzenkörpers 11 abgearbeitet wurde.

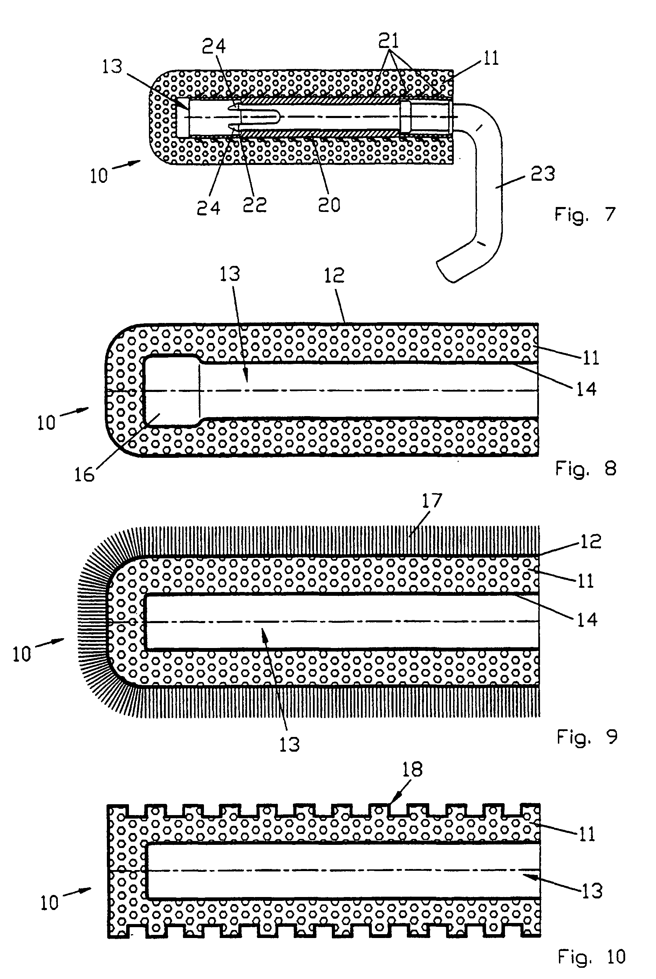

In die Innenausnehmung 13 der Farbrollerwalze 10 kann eine Befestigungshülse 20 eingebracht werden, wie sie in den Figuren 5 und 6 dargestellt ist. Die Befestigungshülse 20 weist auf ihrer Außenoberfläche eine Vielzahl von widerhakenartig vorstehenden Zähnen 21 auf, die beim Einschieben in die Innenausnehmung 13 in deren Wandung oder die dort gebildete Haut eingreifen und die Befestigungshülse 20 somit formschlüssig in dem Walzenkörper 11 halten, wie es in Figur 7 dargestellt ist. Im Inneren der Befestigungshülse 20 ist eine Abstufung oder Hinterschneidung 22 ausgebildet. Dies ermöglicht es, daß Federzungen 24, die am freien Ende eines Tragbügels 23 (Figur 7) ausgebildet sind, beim Einführen in die Befestigungshülse die Abstufung 22 hintergreifen, so daß die Farbrollerwalze 10 auf dem Tragbügel 23 gehalten ist.

Figur 8 zeigt eine alternative Ausgestaltung der Farbrollerwalze 10, die sich von der bisher erläuterten Ausgestaltung dadurch unterscheidet, daß nahe dem Boden der Innenausnehmung 13 eine Hinterschneidung 16 ausgebildet ist, die ebenfalls dazu dient, daß die Federzungen 24 des Tragbügels 23 bei der Montage der Farbrollerwalze 10 eine Spreizung ausführen können. Falls die Haut 14 auf der Wandung der Innenausnehmung 13 eine ausreichende Festigkeit besitzt, kann hierbei auf die Montage einer Befestigungshülse verzichtet werden. Alternativ kann jedoch auch eine rohrartige Befestigungshülse in die Innenausnehmung eingebracht werden, die dann von den Federzungen 24 hintergriffen wird.

Bei der in Figur 9 dargestellten Ausgestaltung ist auf der Außenoberfläche der Farbrollerwalze 10 ein Belag 17 angebracht, der entweder nachträglich aufgezogen oder bereits vor dem Aufschäumen des Walzenkörpers 11 in das Formwerkzeug eingelegt wird.

Durch entsprechende Gestaltung der Innenwandung der Formhälften 2 und 3 läßt sich auf der Außenoberfläche des Walzenkörpers eine Strukturierung 18 ausbilden, wie sie in Figur 10 dargestellt ist.

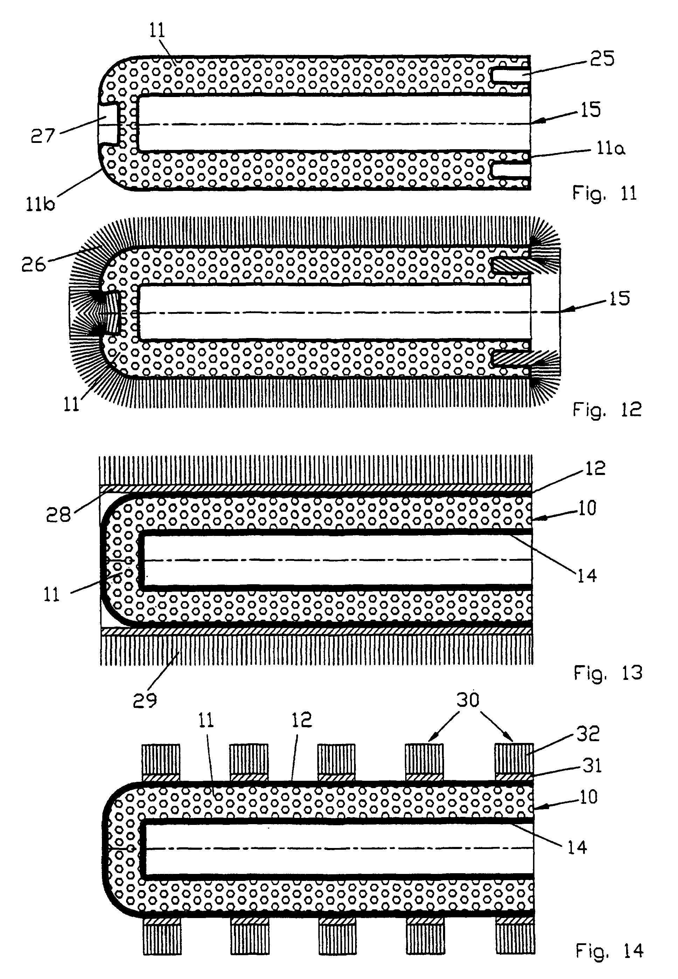

Bei der in Figur 11 dargestellten Ausgestaltung einer Farbrollerwalze wird die Möglichkeit zur Ausbildung einer Strukturierung beim Form- oder Aufschäumvorgang genutzt, um einen nachträglich zu montierenden Überzug festzulegen. Wie Figur 11 zeigt, ist auf der vorderen, abgerundeten Stirnseite 11b des Walzenkörpers 11 eine mittige Vertiefung 27 ausgebildet, während auf der hinteren Stirnseite 11a, die die Einführöffnung 15 aufweist, eine die Einführöffnung 15 umgebende Ringnut 25 ausgeformt ist. Ein Überzug 26, bei dem es sich beispielsweise um einen Plüschbelag handeln kann, wird mit seinen hinteren freien Enden in die Ringnut 25 eingepreßt oder eingestülpt, während er an seinem entgegengesetzten Ende in die Vertiefung 27 eingedrückt wird, wie in Figur 12 dargestellt ist. Die Ringnut 25 und die Vertiefung 27 halten somit den Überzug 26 kraftschlüssig auf dem Walzenkörper 11.

Statt einen flexiblen Überzug auf der Farbrollerwalze zu montieren, kann auch eine in sich stabile Überzughülse 28 auf die Farbrollerwalze 10 aufgeschoben werden, wie es in Figur 13 dargestellt ist. Die Überzughülse 28 weist eine zylindrische Form auf und ist außenseitig mit einem Plüsch- oder Fellbezug 29 belegt. Die Nachgiebigkeit des Walzenkörpers 11 ermöglicht es, die Öberzughülse 28 unter elastischer Verformung des Schaummaterials in kraftschlüssiger Weise auf dem Walzenkörper 11 zu halten, wobei die Häute 12, 14 diesem eine erhöhte Stabilität verleihen.

Während bei der in Figur 13 dargestellten Ausführungsform die Überzughülse 28 die gesamte Farbrollerwalze 10 überdeckt, sind bei dem in Figur 14 dargestellten Ausführungsbeispiel mehrere Überzugringe 30 vorgesehen, die jeweils eine Traghülse 31 sowie einen Plüsch- oder Fellbelag 32 umfassen. Die Überzugringe 30 sind ebenfalls in kraftschlüssiger Weise auf dem Walzenkörper 11 gehalten.

## Patentansprüche

1. Verfahren zur Herstellung einer Farbrollerwalze (10), die einen Walzenkörper (11) aus einem Kunststoff-Schaum mit einer Innenausnehmung (13) zur Aufbringung auf einen Tragbügel (23) aufweist, wobei der Walzenkörper (11) in einem Formwerkzeug (1) aufgeschäumt und durch Steuerung der Verfahrensparameter (Werkzeug-Temperatur, Schaumdichte, Aufschäumdruck, Kühlung etc.) auf der Außenoberfläche des Walzenkörpers (11) und/oder der Wandung der Innenausnehmung (13) eine geschlossene, verfestigte Haut (12, 14) des Kunststoff-Materials gebildet wird, **dadurch gekennzeichnet, daß** die innere und/oder äußere Haut (12, 14) in einem nachfolgenden Verfahrensschritt zumindest teilweise geöffnet oder abgetragen wird.

2. Verfahren nach Anspruch 1, **dadurch gekennzeichnet, daß** der Kunststoffschaum ein Polyester-PUR-Schaum ist.

3. Verfahren nach Anspruch 1 oder 2, **dadurch gekennzeichnet, daß** in der Innenausnehmung (13) eine Befestigungshülse (20) angeordnet wird.

4. Verfahren nach Anspruch 3, **dadurch gekennzeichnet, daß** die Befestigungshülse (20) nachträglich in die Innenausnehmung (13) des Walzenkörpers (11) eingebracht und festgelegt wird.

5. Verfahren nach Anspruch 3, **dadurch gekennzeichnet, daß** die Befestigungshülse (20) in das Formwerkzeug (10) eingebracht und mit dem Schaum für den Walzenkörper (11) umschäumt wird.

6. Verfahren nach Anspruch 5, **dadurch gekennzeichnet, daß** die Befestigungshülse (20) aus einem thermoplastischen Werkstoff mittels eines Mehrkomponentenverfahrens in dem Formwerkzeug in einem vorlaufenden Festigungsschritt gespritzt wird.

7. Verfahren nach einem der Ansprüche 3 bis 6, **dadurch gekennzeichnet, daß** an der Befestigungshülse (20) vorstehende Eingriffselemente (21) ausgebildet werden, die in die Wandung der Innenausnehmung (13) des Walzenkörpers (11) formschlüssig eingreifen.

8. Verfahren nach einem der Ansprüche 1 bis 7, **dadurch gekennzeichnet, daß** die Innenausnehmung (13) zumindest eine Hinterschneidung (16) aufweist.

9. Verfahren nach Anspruch 8, **dadurch gekennzeichnet, daß** die Hinterschneidung (16) unter elastischer Verformung des Walzenkörpers (11) entformt wird.

10. Verfahren nach einem der Ansprüche 1 bis 9, **dadurch gekennzeichnet, daß** der Walzenkörper (11) auf seiner Außenoberfläche mit einer Strukturierung (18) versehen wird.

11. Verfahren nach einem der Ansprüche 1 bis 10, **dadurch gekennzeichnet, daß** der Walzenkörper (11) auf seiner Außenoberfläche mit einem Belag (17) versehen wird.

12. Verfahren nach Anspruch 11, **dadurch gekennzeichnet, daß** der Belag vor dem Aufschäumen des Walzenkörpers (11) in das Formwerkzeug eingelegt wird.

13. Farbrollerwalze mit einem Walzenkörper (11) aus einem Kunststoff-Schaum und einer Innenausnehmung (13) zur Anbringung an einem Tragbügel (23), wobei auf der Außenoberfläche des Walzenkörpers (11) und/oder der Wandung der Innenausnehmung (13) abschnittsweise eine geschlossene, verfestigte Haut (12, 14) des Kunststoff-Materials ausgebildet ist.

14. Farbrollerwalze nach Anspruch 13, **dadurch gekennzeichnet, daß** -in der Innenausnehmung (13) eine Befestigungshülse (20) angeordnet ist.

15. Farbrollerwalze nach Anspruch 14, **dadurch gekennzeichnet, daß** an der Befestigungshülse (20) vorstehende Eingriffselemente (21) ausgebildet sind, die in die Wandung der Innenausnehmung (13) des Walzenkörpers (11) formschlüssig eingreifen.

16. Farbrollerwalze nach einem der Ansprüche 13 bis 15, **dadurch gekennzeichnet, daß** die Innenausnehmung (13) zumindest eine Hinterschneidung (16) aufweist.

17. Farbrollerwalze nach einem der Ansprüche 13 bis 16, **dadurch gekennzeichnet, daß** der Walzenkörper (11) auf seiner Außenoberfläche mit einer Strukturierung (18) versehen ist.

18. Farbrollerwalze nach einem der Ansprüche 13 bis 17, **dadurch gekennzeichnet, daß** der Walzenkörper (11) auf seiner Außenoberfläche mit einem Belag (17) versehen ist.

19. Farbrollerwalze nach einem der Ansprüche 13 bis 18, **dadurch gekennzeichnet, daß** auf der eine Einführöffnung (15) für die Innenausnehmung (13) aufweisenden Stirnseite (11a) des Walzenkörpers (11) eine Nut (25) zur Halterung eines Überzuges (26) ausgebildet ist.

20. Farbrollerwalze nach Anspruch 19, **dadurch gekennzeichnet, daß** die Nut (25) die Einführöffnung (15) umgibt.

21. Farbrollerwalze nach Anspruch 19 oder 20, **dadurch gekennzeichnet, daß** auch auf der entgegengesetzten Stirnseite (11b) des Walzenkörpers (11) eine Vertiefung (27) zur Halterung des Überzuges (26) ausgebildet ist.

## Claims

1. Method for producing a paint roller (10) comprising a roller body (11) made from synthetic foam comprising an inner cavity (13) for mounting on a support arm (23), wherein the roller body (11) is foamed in a shaping tool (1) and, by controlling the processing parameters (tool temperature, foam density, foaming pressure, cooling etc.) a closed compact skin (12,14) of synthetic material is formed on the outer surface of the roller body (11) and/or the inner cavity (13) wall, **characterized in that** the inner and/or outer skin (12,14) is/are at least partially opened or removed in a subsequent method step.

2. Method according to claim 1, **characterized in that** the synthetic foam is a polyester PUR foam.

3. Method according to claim 1 or 2, **characterized in that** a mounting sleeve (20) is disposed in the inner cavity (13).

4. Method according to claim 3, **characterized in that** the mounting sleeve (20) is subsequently inserted and fixed in the inner cavity (13) of the roller body (11).

5. Method according to claim 3, **characterized in that** the mounting sleeve (20) is inserted into the shaping tool (10) and is surrounded by the foam for the roller body (11).

6. Method according to claim 5, **characterized in that** the mounting sleeve (20), made from a thermoplastic material, is injected into the shaping tool in a preceding stabilizing step using a multiple component method.

7. Method according to any one of the claims 3 through 6, **characterized in that** protruding engagement elements (21) are formed on the mounting sleeve (20) which engage in the inner cavity (13) wall of the roller body (11) in positive engagement.

8. Method according to any one of the claims 1 through 7, **characterized in that** the inner cavity (13) has at least one undercut (16).

9. Method according to claim 8, **characterized in that** the undercut (16) is distorted by elastically deforming the roller body (11).

10. Method according to any one of the claims 1 through 9, **characterized in that** the roller body (11) comprises a structure (18) on its outer surface.

11. Method according to any one of the claims 1 through 10, **characterized in that** the roller body (11) comprises a cover (17) on its outer surface.

12. Method according to claim 11, **characterized in that** the cover is inserted into the shaping tool before foaming the roller body (11).

13. Paint roller comprising a roller body (11) of synthetic foam, and an inner cavity (13) for mounting onto a support arm (23), wherein a closed compact skin (12,14) of the synthetic material is formed on sections of the outer surface of the roller body (11) and/or on the wall of the inner cavity (13).

14. Paint roller according to claim 13, **characterized in that** a mounting sleeve (20) is disposed in the inner cavity (13).

15. Paint roller according to claim 14, **characterized in that** protruding engagement elements (21) are formed on the mounting sleeve (20) engaging in the inner cavity (13) wall of the roller body (11), in positive engagement.

16. Paint roller according to any one of the claims 13 through 15, **characterized in that** the inner cavity (13) has at least one undercut (16).

17. Paint roller according to any one of the claims 13 through 16, **characterized in that** the roller body (11) comprises a structure (18) on its outer surface.

18. Paint roller according to any one of the claims 13 through 17, **characterized in that** the roller body (11) comprises a cover (17) on its outer surface.

19. Paint roller according to any one of the claims 13 through 18, **characterized in that** a groove (25) for holding a cover (26) is formed on that end face (11a) of the roller body (11) having an insert opening (15) for the inner cavity (13).

20. Paint roller according to claim 19, **characterized in that** the groove (25) surrounds the insert opening (15).

21. Paint roller according to claim 19 or 20, **characterized in that** the opposing end face (11b) of the roller body (11) also comprises a depression (27) for holding the cover (26).

## Revendications

1. Procédé de fabrication d'un manchon pour rouleau à peindre (10), comprenant un corps de manchon (11) en mousse alvéolaire présentant un évidement intérieur (13) pour sa fixation sur un étrier-support (23), dans lequel le corps de manchon (11) est moussé dans un moule (1) et dans lequel on forme, en contrôlant les paramètres de procédé (température du moule, épaisseur de la mousse, pression de moussage, refroidissement etc...) une peau (12, 14) fermée, renforcée de matériau plastique sur la surface extérieure du corps de manchon (11) et/ou de la paroi de l'évidement intérieur (13), **caractérisé en ce que** la peau (12,14) intérieure et/ou extérieure est au moins partiellement ouverte ou enlevée dans une étape ultérieure du procédé.

2. Procédé selon la revendication 1, **caractérisé en ce que** la mousse alvéolaire est une mousse d'un composé de polyester-PUR.

3. Procédé selon l'une quelconque des revendications 1 ou 2, **caractérisé en ce que** l'on dispose dans l'évidement intérieur (13) un mandrin de fixation (20).

4. Procédé selon la revendication 3, **caractérisé en ce que** le mandrin de fixation (20) est introduit et fixé postérieurement dans l'évidement intérieur (13) du corps de manchon (11).

5. Procédé selon la revendication 3, **caractérisé en ce que** le mandrin de fixation (20) est introduit dans le moule (10) et expansé avec la mousse du corps de manchon (11).

6. Procédé selon la revendication 5, **caractérisé en ce que** le mandrin de fixation (20) est pulvérisé à partir d'une matière thermoplastique au moyen d'un procédé à composants multiples dans le moule durant une étape de fixation antérieure.

7. Procédé selon l'une quelconque des revendications 3 à 6, **caractérisé en ce que** l'on conforme sur le mandrin de fixation (20) des éléments d'encliquetage (21) en saillie venant en prise à ajustement de forme dans la paroi de l'évidement intérieur (13) du corps de manchon (11).

8. Procédé selon l'une quelconque des revendications 1 à 7, **caractérisé en ce que** l'évidement intérieur (13) présente au moins une contre-dépouille (16).

9. Procédé selon la revendication 8, **caractérisé en ce que** la contre-dépouille (16) est démoulée par déformation élastique du corps de manchon (11).

10. Procédé selon l'une quelconque des revendications 1 à 9, **caractérisé en ce que** le corps de manchon (11) présente sur sa surface extérieure une structuration (18).

11. Procédé selon l'une quelconque des revendications 1 à 10, **caractérisé en ce que** le corps de manchon (11) présente sur sa surface extérieure une garniture (17).

12. Procédé selon la revendication 11, **caractérisé en ce que** la garniture est déposée dans le moule avant l'expansion du corps de manchon (11).

13. Manchon pour rouleau à peindre présentant un corps de manchon (11) en plastique expansé et un évidement intérieur (13) pour sa fixation sur un étrier-support (23), dans lequel on forme sur la surface extérieure du corps de manchon (11) et/ou de la paroi de l'évidement intérieur (13), une peau (12, 14) fermée, renforcée de matériau plastique.

14. Manchon de rouleau à peindre selon la revendication 13, **caractérisé en ce qu'**un mandrin de fixation (20) est monté dans l'évidement intérieur (13).

15. Manchon de rouleau à peindre selon la revendication 14, **caractérisé en ce que** des éléments d'encliquetage (21) en saillie sont conformés sur le mandrin de fixation (20), éléments venant en prise à ajustement de forme dans la paroi de l'évidement intérieur (13) du corps de manchon (11).

16. Manchon de rouleau à peindre selon l'une quelconque des revendications 13 à 15, **caractérisé en ce que** l'évidement intérieur (13) présente au moins une contre-dépouille (16).

17. Manchon de rouleau à peindre selon l'une quelconque des revendications 13 à 16, **caractérisé en ce que** le corps de manchon (11) présente sur sa surface extérieure une structuration (18).

18. Manchon de rouleau à peindre selon l'une quelconque des revendications 13 à 17, **caractérisé en ce que** le corps de manchon (11) présente sur sa surface extérieure une garniture (17).

19. Manchon de rouleau à peindre selon l'une quelconque des revendications 13 à 18, **caractérisé en ce que** sur une face frontale (11a) du corps de manchon (11) présentant une ouverture (15) d'introduction pour l'évidement intérieur (13) est conformée une rainure (25) de fixation d'un revêtement ou garniture (26).

20. Manchon de rouleau à peindre selon la revendication 19, **caractérisé en ce que** la rainure (25) entoure l'ouverture (15) d'introduction.

21. Manchon de rouleau à peindre selon la revendication 19 ou 20, **caractérisé en ce qu'**une gorge (27) est également conformée sur la face frontale (11b) opposée du corps de manchon (11) pour la fixation du revêtement ou garniture (26).
